# FASCICULE DE BREVET EUROPEEN

(11) **EP 3 701 580 B1**
(45) Date de publication et mention de la délivrance du brevet: **10.11.2021**
(21) Numéro de dépôt: 18833460.1
(22) Date de dépôt: 07.12.2018
(51) Int. Cl.: H01M 4/66, H01M 10/0525, H01M 10/054

(54) **COLLECTEUR DE COURANT ET ENSEMBLE COLLECTEUR DE COURANT-ELECTRODE POUR ACCUMULATEUR FONCTIONNANT SELON LE PRINCIPE D'INSERTION ET DESINSERTION IONIQUE**
STROMABNEHMER UND STROMABNEHMER-ELEKTRODENANORDNUNG FÜR EINEN AKKUMULATOR MIT BETRIEB NACH DEM PRINZIP DER IONENINSERTION UND -DEINSERTION
CURRENT COLLECTOR AND CURRENT COLLECTOR-ELECTRODE ASSEMBLY FOR AN ACCUMULATOR OPERATING ACCORDING TO THE PRINCIPLE OF ION INSERTION AND DEINSERTION

(30) Priorité: 08.12.2017 FR 1761871
(43) Date de publication de la demande: 02.09.2020
(73) Titulaire: Commissariat à l'énergie atomique et aux énergies alternatives, 75015 Paris (FR)
(72) Inventeur: GUTEL, Thibaut, 38113 Veurey-Voroize (FR); PORCHER, Willy, 38180 Seyssins (FR)
(74) Mandataire: Brevalex
(86) Numéro de dépôt international: PCT/FR2018/053159
(87) Numéro de publication internationale: WO 2019/110947

(56) Documents cités:
- WO-A1-2011/157958
- WO-A1-2017/067996
- CN-A- 105 895 921
- FR-A1- 3 052 597
- SHANMUKARAJ D ET AL: "Sacrificial salts: Compensating the initial charge irreversibility in lithium batteries", ELECTROCHEMISTRY COMMUNICATIONS, ELSEVIER, AMSTERDAM, NL, vol. 12, no. 10, 1 octobre 2010 (2010-10-01), pages 1344-1347, XP027423660, ISSN: 1388-2481, DOI: 10.1016/J.ELECOM.2010.07.016 [extrait le 2010-10-01]

## Description

### DOMAINE TECHNIQUE

La présente invention a trait à un nouveau type de collecteur de courant et à un ensemble comprenant ce type de collecteur de courant et une électrode destinés à être utilisés dans des accumulateurs fonctionnant selon le principe d'insertion et désinsertion ionique dans le matériau actif de l'électrode, des accumulateurs de ce type pouvant être des accumulateurs M-ion, avec M correspondant à du lithium, du sodium, du potassium, du magnésium.

Les accumulateurs de ce type ont pour vocation d'être utilisés comme source d'énergie autonome, en particulier, dans les équipements électroniques portables (tels que les téléphones mobiles, les ordinateurs portables, l'outillage), afin de remplacer progressivement les accumulateurs nickel-cadmium (NiCd) et nickel-hydrure métallique (NiMH). Ils peuvent également servir à fournir l'alimentation en énergie nécessaire aux nouvelles microapplications, telles que les cartes à puce, les capteurs ou autres systèmes électromécaniques ainsi que pour l'électromobilité.

Du point de vue de leur fonctionnement, les accumulateurs susmentionnés fonctionnent soit selon le principe d'insertion-désinsertion ionique dans les matériaux actifs.

En prenant pour exemple, les accumulateurs au lithium, lors de la décharge de l'accumulateur, l'électrode négative libère du lithium sous forme ionique Li⁺, qui migre à travers l'électrolyte conducteur ionique et vient s'incorporer dans le matériau actif de l'électrode positive pour former un matériau, dans lequel est inséré le lithium. Le passage de chaque ion Li⁺ dans le circuit interne de l'accumulateur est exactement compensé par le passage d'un électron dans le circuit externe, générant ainsi un courant électrique.

En revanche, lors de la charge de l'accumulateur, les réactions se produisant au sein de l'accumulateur sont les réactions inverses de la décharge, à savoir que :
- l'électrode négative va incorporer du lithium dans le réseau du matériau la constituant ; et
- l'électrode positive va libérer du lithium, lequel va s'incorporer dans le matériau de l'électrode négative pour former un matériau d'insertion ou un alliage.

Lors du premier cycle de charge de l'accumulateur, quand le matériau actif de l'électrode négative est porté à un potentiel d'insertion du lithium, une partie du lithium va réagir avec l'électrolyte à la surface des grains de matériau actif de l'électrode négative pour former une couche de passivation à sa surface. La formation de cette couche de passivation consomme une quantité d'ions lithium non négligeable, ce qui se matérialise par une perte irréversible de capacité de l'accumulateur (cette perte étant qualifiée de capacité irréversible et pouvant être évaluée de l'ordre de 5 à 20% de la capacité totale initiale du système), du fait que les ions lithium ayant réagi ne sont plus disponibles pour les cycles ultérieurs de charge/décharge. D'autres réactions de surface peuvent également se produire avec consommation du lithium, comme la réduction de la couche d'oxyde située à la surface du matériau actif, notamment lorsque celui-ci est du silicium, pour former des composés du type Li₄SiO₄. Qui plus est, une partie des réactions d'insertion dans les matériaux d'insertion peuvent être irréversibles, ce qui consomme du lithium, qui ne sera plus disponible par la suite.

Il convient donc de minimiser, au maximum, ces pertes lors de la première charge, afin que la densité d'énergie de l'accumulateur soit la plus élevée possible.

Pour compenser ce phénomène, il peut être envisagé une source de lithium supplémentaire dans le matériau d'électrode, laquelle peut servir également de réserve d'ions pour compenser les pertes au cours de la durée de vie de l'accumulateur et ainsi l'améliorer ou pour pouvoir travailler avec un matériau d'électrode sur un domaine de capacités particulier, pour lequel la perte par cycle est, par exemple, diminuée.

Pour ce faire, il a été proposé des techniques d'introduction de lithium additionnel dans l'électrode négative ou l'électrode positive pour pallier l'inconvénient susmentionné, ces techniques pouvant être :
- des techniques de prélithiation de l'électrode négative ; ou
- des techniques de surlithiation de l'électrode positive.

Concernant les techniques de prélithiation de l'électrodenégative, on peut citer :
- les techniques dites « *in situ »* consistant à déposer sur l'électrode négative du lithium métallique (c'est-à-dire au degré d'oxydation « 0 ») soit sous forme d'une feuille métallique (comme décrit dans WO 1997031401) ou soit sous forme d'une poudre de lithium métallique stabilisée par une couche protectrice (comme décrit dans Electrochemistry Communications 13 (2011) 664-667*)* mélangée avec l'encre comprenant les ingrédients de l'électrode négative (à savoir, le matériau actif, les conducteurs électroniques et un liant organique), l'insertion de lithium se faisant, indépendamment de l'alternative retenue, de manière spontanée par un phénomène de corrosion ;
- les techniques dites « *ex situ »* consistant à prélithier électrochimiquement l'électrode négative, en plaçant celle-ci dans un montage comportant un bain électrolytique et une contre-électrode comprenant du lithium, ces techniques permettent de contrôler la quantité de lithium introduite dans l'électrode négative mais présentent toutefois l'inconvénient de nécessiter la mise en place d'un montage expérimental lourd.

WO2017/067996A1 divulgue un accumulateur à insertion ionique lithium dans lequel l' électrode positive est traitée en déposant sur la face destinée à être en contact avec l' électrolyte une encre comprenant 87% massique d' oxalate de lithium (sel sacrificiel), 10% massique d'un conducteur électronique du type noir du carbone et 3% massique d'un liant polymérique du type polyfluorure de vinylidène.

En variante, il a été également proposé, dans l'art antérieur, des techniques de surlithiation de l'électrode positive, notamment, en ajoutant dans la composition comprenant les ingrédients constitutifs de l'électrode positive, un sel sacrificiel qui, lors de la première charge, va se décomposer et fournir la quantité nécessaire de Li pour former la couche de passivation à la surface de l'électrode négative et compenser les phénomènes de consommation irréversible du lithium.

Dans ces techniques, il est à noter que le sel sacrificiel doit, en principe, pouvoir se décomposer à un potentiel situé dans une fenêtre de potentiels compatible avec l'électrode concernée et l'électrolyte lors de la première charge.

Aussi, lorsque la première charge a lieu, deux réactions électrochimiques simultanées génèrent des ions Li⁺, que sont la désinsertion de lithium de l'électrode positive et la décomposition du sel sacrificiel. Lors de la décomposition du sel sacrificiel, il se forme notamment des sous-produits inertes, solides, liquides ou gazeux, qui seront éventuellement évacués à l'issue de l'étape de formation. En effet, on évite ainsi d'alourdir inutilement l'accumulateur par ces sous-produits, qui, en outre, pourraient gêner le fonctionnement électrochimique ultérieur de la cellule.

Qui plus est, la décomposition du sel sacrificiel au sein de l'électrode positive peut engendrer la création de pores au sein de celle-ci, lesquels constituent ainsi des défauts morphologiques, qui peuvent nuire aux performances de l'accumulateur, en particulier, les performances en puissance et la durée de vie.

Aussi, au vu de ce qui précède, les auteurs de la présente invention se sont fixé pour objectif de mettre au point un collecteur spécifique, qui une fois disposé dans un ensemble comprenant ledit collecteur de courant et une électrode, permet d'éviter une modification des propriétés morphologiques de l'électrode, en cours de fonctionnement de l'accumulateur.

### EXPOSE DE L'INVENTION

Ainsi, l'invention a trait à un collecteur de courant pour accumulateur à insertion ou désinsertion ionique revêtu sur au moins une de ses faces d'une couche non active destinée à faire la jonction entre ledit collecteur de courant et une électrode comprenant un matériau actif, ladite couche non active comprenant au moins un liant organique et au moins un sel, dont un des ions est celui intervenant dans le processus d'insertion ou désinsertion ionique dans le matériau actif de l'électrode, lequel sel est un sel sacrificiel.

Par couche non active, on entend, classiquement, une couche dépourvue de matériau actif et qui ne peut donc pas remplir la fonction d'électrode.

Par matériau actif, on entend, classiquement, dans ce qui précède et ce qui suit, le matériau qui est directement impliqué dans les réactions réversibles d'insertion et de désinsertion des ions dans les matériaux actifs d'électrode lors des processus de charge et de décharge, en ce sens qu'il est apte à insérer et désinsérer des ions dans son réseau, ces ions pouvant être des ions lithium, lorsque l'accumulateur est un accumulateur lithium-ion, des ions sodium, lorsque l'accumulateur est un accumulateur sodium-ion, des ions potassium, lorsque l'accumulateur est un accumulateur potassium-ion ou des ions magnésium, lorsque l'accumulateur est un accumulateur magnésium-ion.

En proposant un tel collecteur, les auteurs de l'invention ont résolu la problématique des modifications morphologiques de l'électrode par consommation du sel sacrificiel, ce dernier étant désormais incorporé dans une couche non active déposée sur le collecteur de courant et destinée à faire la jonction entre celui-ci et l'électrode (cette couche pouvant être qualifiée de couche intercalaire, une fois que le collecteur de courant est intégré dans un ensemble comportant ledit collecteur et une électrode). Ce sel permet de compenser la consommation irréversible d'ions par décomposition du sel par suroxydation, la décomposition du sel contenu dans cette couche étant favorisée du fait qu'il est placé au plus près de la surface du collecteur de courant. A titre d'exemple, dans un accumulateur basé sur le système LiFePO_{4/}graphite, dans lequel l'électrode de l'ensemble est une électrode positive comprenant du LiFePO₄, la présence d'un sel dans la couche intercalaire (en l'occurrence, un sel de lithium) permet de compenser la consommation irréversible d'ions lithium lors du premier cycle, procurant ainsi un gain de 10% de capacité lors du cycle ultérieur. Ce sel peut être également utilisé comme réserve d'ions au cours de la vie de l'accumulateur ou pour faire travailler un matériau actif d'électrode sur un domaine particulier de capacités. Qui plus est, la présence de cette couche non active entre le collecteur de courant et l'électrode permet de limiter les phénomènes de corrosion, notamment du collecteur, de réduire la résistance de l'électrode et de promouvoir l'adhérence de l'électrode et de limiter les risques de décollement de celle-ci par rapport à un ensemble où elle serait directement déposée sur le collecteur de courant.

Selon l'invention, le collecteur de courant comporte un substrat conducteur de l'électricité, par exemple, un substrat métallique (ce substrat métallique pouvant se présenter sous forme d'un feuillard métallique), lequel substrat est revêtu sur au moins une de ses faces par ladite couche non active.

A titre d'exemple, il peut s'agir d'un substrat métallique constitué d'un ou plusieurs éléments métalliques choisis parmi le cuivre, l'aluminium, le nickel et les mélanges de ceux-ci.

Comme mentionné ci-dessus, la couche non active destinée à faire la jonction entre le collecteur de courant et l'électrode comprend au moins un liant organique et au moins un sel, dont un des ions est celui intervenant dans le processus d'insertion ou désinsertion ionique dans le matériau actif de l'électrode, lequel sel est, avantageusement, un sel sacrificiel. Cette couche non active peut présenter une épaisseur allant de 100 nm à 10 µm, de préférence, de 1 à 2 µm.

Le sel, dont un des ions est celui intervenant dans le processus d'insertion ou de désinsertion ionique dans le matériau actif peut être, avantageusement, qualifié de « sel sacrificiel ». En effet, lors de la première charge de l'accumulateur, dans laquelle l'électrode est incorporée, ce sel peut se décomposer, ce qui se traduit par une libération d'ions, qui vont compenser les réactions de consommation irréversible des ions notamment au cours de la formation de la couche de passivation à la surface de l'autre électrode de signe opposée, lors des phénomènes d'intercalation en partie irréversible ou de réactions à la surface des électrodes.

Aussi, les ions nécessaires pour la formation de la couche de passivation ne contribuent pas à la dénaturation du matériau actif de l'électrode mais la perte en ions pour la formation de cette couche est compensée par la présence du sel sacrificiel. La part des ions du matériau actif de l'électrode, par exemple, positive, ne sont donc pas perdus pour la formation de cette couche lors de la première charge et donc la perte de capacité de l'accumulateur s'en trouve amoindrie voire nulle. Les réactions irréversibles de l'électrode, par exemple, négative sont compensées par une réaction irréversible à l'électrode, par exemple, positive, ce qui est plus efficace en termes de densité pour l'accumulateur.

Le sel présent dans cette couche peut être tous les sels comprenant un anion et un contre-ion alcalin (lithium, par exemple, lorsque l'accumulateur est un accumulateur au lithium ; sodium, par exemple, lorsque l'accumulateur est un accumulateur au sodium ; potassium, par exemple, lorsque l'accumulateur est un accumulateur au potassium), un contre-ion alcalino-terreux (magnésium, par exemple, lorsque l'accumulateur au magnésium ; calcium, par exemple, lorsque l'accumulateur est un accumulateur au calcium), ces sels pouvant être décomposés électrochimiquement en libérant l'ion correspondant (à savoir, l'ion alcalin ou alcalino-terreux susmentionné) et un sous-produit inerte, de préférence, gazeux.

A titre d'exemple de sels, on peut citer les sels appartenant aux catégories suivantes :
- les azotures de formule N₃A, avec A correspondant à un cation lithium, sodium ou potassium ; les diazotures de formule (N₃)₂A¹ avec A¹ correspondant à un cation magnésium ou calcium ;
- les sels oxocarbonés, tels que ceux répondant à l'une des formules (I) à (IV) suivantes : 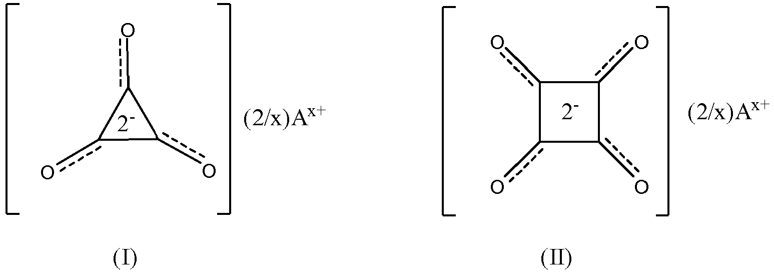 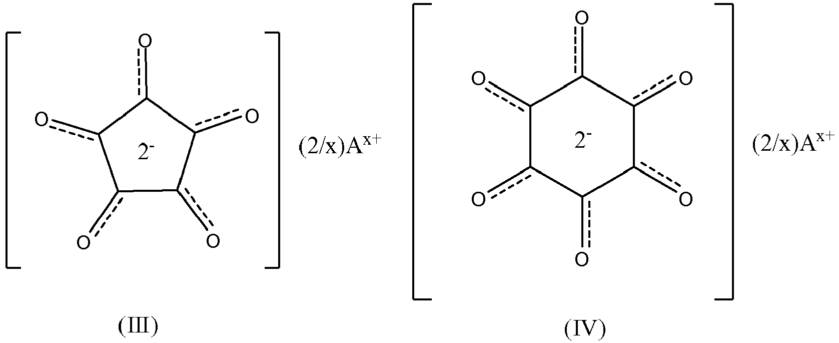 les formules susmentionnées indiquant que deux charges négatives sont portées par deux atomes d'oxygène du cycle auxquels ils sont liés, les autres atomes d'oxygène étant liés par une double liaison au cycle, A correspondant à un cation lithium, sodium, potassium, calcium, magnésium et x correspondant au nombre de charges du cation ;
- les cétocarboxylates, tels que ceux répondant à l'une des formules (V) à (VII) suivantes : 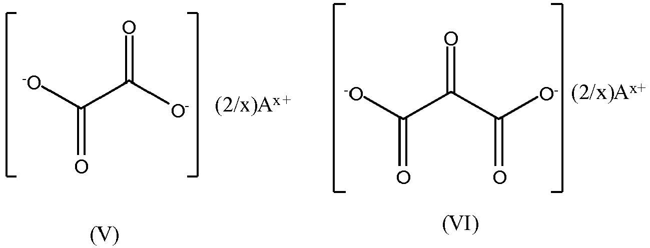 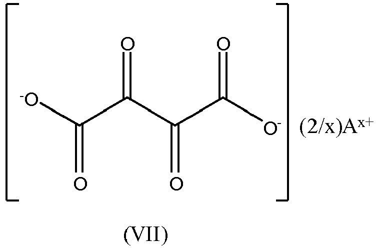 avec A correspondant à un cation lithium, sodium, potassium, calcium, magnésium et x correspondant au nombre de charges du cation ;
- les hydrazides de lithium, tels que ceux répondant à l'une des formules (VIII) et (IX) suivantes : 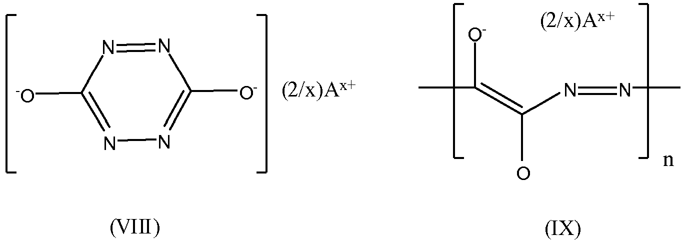
avec A correspondant à un cation lithium, sodium, potassium, calcium, magnésium, x correspondant au nombre de charges du cation et n correspondant au nombre de répétition du motif pris entre crochets, ce nombre de répétition pouvant aller de 3 à 1000.

De préférence, le ou les sels compris dans la couche non active peuvent être choisis parmi les azotures de formule N₃A, avec A étant tel que défini ci-dessus, les sels oxocarbonés de formule (II) telle que définie ci-dessus et les cétocarboxylates de formule (V) telle que définie ci-dessus.

De manière plus spécifique, lorsqu'il s'agit de sels de lithium pour accumulateur au lithium, on peut mentionner comme exemples :
- l'azoture de lithium de formule LiN₃ ;
- le squarate de lithium de formule (X) suivante : 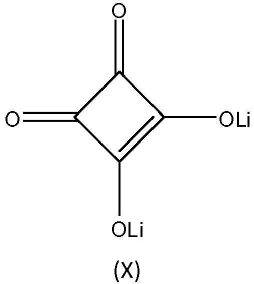
- l'oxalate de lithium de formule (XI) suivante :

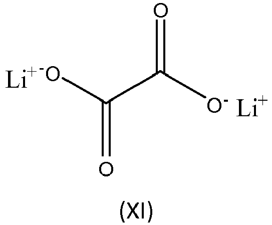

En outre, le ou les liants organiques peuvent être des liants polymériques, qui peuvent être choisis parmi les polymères vinyliques, tels que les polyfluorures de vinylidène (connus sous l'abréviation PVDF), les celluloses modifiées, telles que les carboxyméthylcelluloses (connues sous l'abréviation CMC) éventuellement sous forme de sels (par exemple, les carboxyméthylcelluloses de sodium, les carboxyméthylcelluloses d'ammonium), les polyacrylates, tels que les polyacrylates de lithium, les polyamides, les polyimides, les polyesters et les mélanges de ceux-ci.

Enfin, la couche non active peut comprendre au moins un matériau carboné conducteur électronique.

Le matériau carboné conducteur électronique peut être un matériau comprenant du carbone à l'état élémentaire et, de préférence, sous forme divisée, tel que des particules sphériques, des plaquettes ou des fibres.

On peut citer, comme matériau carboné, du graphite ; des billes de mésocarbone; des fibres de carbone; du noir de carbone, tel que du noir d'acétylène, du noir tunnel, du noir de fourneau, du noir de lampe, du noir d'anthracène, du noir de charbon, du noir de gaz, du noir thermique ; du graphène ; des nanotubes de carbone ; et des mélanges de ceux-ci.

Le ou les sels peuvent être présents en une teneur allant de 1 à 80 % massique par rapport à la masse totale des ingrédients de la couche non active.

Le ou les liants organiques peuvent être présents en une teneur allant de 1 à 50% massique par rapport à la masse totale des ingrédients de la couche non active.

Enfin, le cas échéant, le matériau carboné conducteur électronique peut être présent en une teneur allant de 0,1 à 80% massique par rapport à la masse totale des ingrédients de la couche non active.

Avantageusement, la couche est composée exclusivement d'au moins un sel tel que défini ci-dessus, dont un des ions est celui intervenant dans le processus d'insertion ou désinsertion ionique dans le matériau actif, d'au moins un liant organique tel que défini ci-dessus et, éventuellement, d'au moins un matériau carboné conducteur électronique tel que défini ci-dessus.

De manière structurale, la couche non active peut se présenter sous forme d'un matériau composite comprenant une matrice polymérique constituée du ou desdits liants organiques, dans laquelle sont dispersés le ou les sels et, éventuellement, le ou les matériaux carbonés conducteurs électroniques.

A titre d'exemple, la couche peut être constituée d'une matrice en PVDF, dans laquelle sont dispersés du noir de carbone et du squarate de lithium, notamment lorsque le collecteur est destiné à un accumulateur au lithium.

Comme mentionné ci-dessus, la couche non active disposée sur le collecteur de l'invention est destinée à faire la jonction entre le collecteur de courant et l'électrode d'un accumulateur à insertion ou désinsertion ionique, ce qui signifie, en d'autres termes, que le collecteur de courant ainsi revêtu d'une couche non active est destiné à être incorporé dans un ensemble comprenant ledit collecteur et une électrode, la couche non active se trouvant ainsi interposée entre le collecteur de courant et l'électrode.

Aussi, l'invention a également trait à un ensemble comprenant le collecteur de courant tel que défini ci-dessus et une électrode, la couche non active revêtant le collecteur de courant faisant jonction entre le collecteur de courant et l'électrode comprenant un matériau actif, soit, dit en d'autres termes, la couche non active revêtant le collecteur de courant étant intercalée entre le collecteur de courant et l'électrode.

Les caractéristiques du collecteur du courant et de la couche non active déjà décrites plus haut peuvent être reprises pour le compte de cet ensemble.

L'électrode, quant à elle, comprend un matériau actif, c'est-à-dire un matériau apte à intervenir dans les réactions d'insertion et de désinsertion se produisant lors du fonctionnement de l'accumulateur.

Lorsque l'ensemble est destiné à un accumulateur au lithium, le matériau actif de l'électrode peut être un matériau du type oxyde lithié comprenant au moins un élément métallique de transition, du type phosphate lithié comprenant au moins un élément métallique de transition, du type silicate lithié comprenant au moins un élément métallique de transition ou du type borate lithié comprenant au moins un élément métallique de transition.

Comme exemples de composés oxydes lithiés comprenant au moins un élément métallique de transition, on peut citer des oxydes simples ou des oxydes mixtes (c'est-à-dire des oxydes comprenant plusieurs éléments métalliques de transition distincts) comprenant au moins un élément métallique de transition, tels que des oxydes comprenant du nickel, du cobalt, du manganèse et/ou de l'aluminium (ces oxydes pouvant être des oxydes mixtes).

Plus spécifiquement, comme oxydes mixtes comprenant du nickel, du cobalt, du manganèse et/ou de l'aluminium, on peut citer les composés de formule (XII) suivante :

LiM²O₂ (XII)

dans laquelle M² est un élément choisi parmi Ni, Co, Mn, Al et les mélanges de ceux-ci.

A titre d'exemples de tels oxydes, on peut citer les oxydes lithiés LiCoO₂, LiNiO₂ et les oxydes mixtes Li(Ni,Co,Mn)O₂ (tel que Li(Ni_{1/3}Mn_{1/3}Co_{1/3})O₂ ou Li(Ni_{0,6}Mn_{0,2}Co_{0,2})O₂ (connu également sous la dénomination NMC), Li(Ni,Co,Al)O₂ (tel que Li(Ni_{0,8}Co_{0,15}Al_{0,05})O₂ connu également sous la dénomination NCA) ou Li(Ni,Co,Mn,Al)O₂, les oxydes dits riches en lithium Li₁₊ₓ(Ni,Co,Mn)O₂, x étant supérieur à 0.

Comme exemples de composés phosphates lithiés comprenant au moins un élément métallique de transition, on peut citer les composés de formule LiM¹PO₄, dans laquelle M¹ est choisi parmi Fe, Mn, Ni, Co et les mélanges de ceux-ci, tel que LiFePO₄.

Comme exemples de composés silicates lithiés comprenant au moins un élément métallique de transition, on peut citer les composés de formule Li₂M¹SiO₄, dans laquelle M¹ est choisi parmi Fe, Mn, Co et les mélanges de ceux-ci.

Comme exemples de composés borates lithiés comprenant au moins un élément métallique de transition, on peut citer les composés de formule LiM¹BO₃, dans laquelle M¹ est choisi parmi Fe, Mn, Co et les mélanges de ceux-ci.

Lorsque l'ensemble est destiné à un accumulateur du type sodium-ion, le matériau actif de l'électrode peut être :
- un matériau du type oxyde sodé comprenant au moins un élément métallique de transition ;
- un matériau du type phosphate ou sulfate sodé comprenant au moins un élément métallique de transition ;
- un matériau du type fluorure sodé ; ou
- un matériau du type sulfure comprenant au moins un élément métallique de transition.

Comme exemples de composés oxydes sodés comprenant au moins un élément métallique de transition, on peut citer des oxydes simples ou des oxydes mixtes (c'est-à-dire des oxydes comprenant plusieurs éléments métalliques de transition distincts) comprenant au moins un élément métallique de transition, tels que des oxydes comprenant du nickel, du cobalt, du manganèse, du chrome, du titane, du fer et/ou de l'aluminium (ces oxydes pouvant être des oxydes mixtes).

Plus spécifiquement, comme oxydes mixtes comprenant du nickel, du cobalt, du manganèse et/ou de l'aluminium, on peut citer les composés de formule (XIII) suivante :

NaM²O₂ (XIII)

dans laquelle M² est un élément choisi parmi Ni, Co, Mn, Al et les mélanges de ceux-ci.

A titre d'exemples de tels oxydes, on peut citer les oxydes sodés NaCoO₂, NaNiO₂ et les oxydes mixtes Na(Ni,Co,Mn)O₂ (tel que Na(Ni_{1/3}Mn_{1/3}Co_{1/3})O₂), Na(Ni,Co,Al)O₂ (tel que Na(Ni_{0,8}Co_{0,15}Al_{0,05})O₂) ou Na(Ni,Co,Mn,Al)O₂.

Comme exemples de composés phosphates sodés comprenant au moins un élément métallique de transition, on peut citer les composés de formule NaM¹PO₄, Na₃M¹₂(PO₄)₃, Na₄M¹₃(PO₄)₂P₂O₇, où M¹ est choisi parmi Fe, Mn, Ni, Ti, V, Mo, Co et les mélanges de ceux-ci, tel que NaFePO₄.

Le matériau à base de sodium peut être, également, choisi parmi :
- les fluorophosphates de sodium, tels que :
   ^{∗}les fluorophosphates de formule Na₂XPO₄F, dans laquelle X est un élément choisi parmi Fe, Mn, Ni, Ti, V, Mo, Co et les mélanges de ceux-ci ;
   ^{∗}les fluorophosphates de formule Na₃X₂(PO₄)₂F₃, dans laquelle X est un élément choisi parmi Fe, Mn, Ni, Ti, V, Mo Co et les mélanges de ceux-ci (ces composés étant également désignés par l'abréviation NVPF, lorsque X correspond au vanadium) ;
- les fluorosulfates de sodium de formule NaT'SO₄F, dans laquelle T' est un élément choisi parmi Fe, Mn, Co, Ni et les mélanges de ceux-ci.

Comme exemples de composés fluorures sodés, on peut citer NaFeF₃, NaMnF₃ et NaNiF₃.

Enfin, comme exemples de composés sulfures, on peut citer Ni₃S₂, FeS₂ and TiS₂.

Lorsque l'ensemble est destiné à un accumulateur du type magnésium-ion, un matériau actif de l'électrode peut être MoS₆.

Lorsque l'accumulateur est un accumulateur potassium-ion, les matériaux actifs de l'électrode peuvent être des matériaux similaires à ceux des accumulateurs lithium-ion susmentionnés, si ce n'est que Li est remplacé par K.

En outre, l'électrode peut comprendre également au moins un liant organique tel qu'un liant polymérique, comme du polyfluorure de vinylidène (PVDF), un mélange carboxyméthylcellulose avec un latex du type styrène et/ou acrylique ainsi qu'au moins un additif conducteur de l'électricité, qui peut être des matériaux carbonés, comme du noir de carbone. Qui plus est, l'électrode positive peut se présenter, d'un point de vue structural, comme un matériau composite comprenant une matrice en liant(s) organique(s) au sein de laquelle sont dispersées des charges constituées par le matériau actif (se présentant, par exemple, sous forme particulaire) et éventuellement le ou les additifs conducteurs de l'électricité. Dans ce cas, du fait de la présence d'une couche non active intercalaire entre le collecteur et l'électrode, laquelle comprend un matériau carboné conducteur électronique, la quantité en additif(s) conducteur(s) de l'électricité présente dans l'électrode peut être moindre par rapport aux modes de réalisation de l'art antérieur, où cette couche intercalaire n'est pas présente. Il en est de même de la quantité en liant(s) organique(s), lorsque la couche intercalaire et l'électrode comprennent ce type d'ingrédients.

L'ensemble conforme à l'invention peut être réalisé par des techniques simples à la portée de l'homme du métier et plus spécifiquement, par un procédé comprenant la succession d'étapes suivantes :
- une étape de formation de la couche non active par dépôt, par exemple, par enduction, puis séchage sur un collecteur de courant d'une première composition comprenant au moins un liant organique, au moins un sel, dont un des ions est celui intervenant dans le processus d'insertion ou désinsertion ionique dans le matériau actif de l'électrode, et éventuellement au moins un matériau carboné conducteur électronique ;
- une étape de formation sur la couche ainsi obtenue de l'électrode par dépôt, par exemple, par enduction, puis séchage d'une deuxième composition comprenant au moins un matériau actif et éventuellement au moins un liant organique et au moins un additif conducteur de l'électricité.

La vitesse de dépôt de l'électrode peut être augmentée par rapport à celle de la couche non active, du fait que la quantité éventuelle d'additif(s) conducteur(s) électronique(s), de liant(s) organique(s) peut être amoindrie en raison de la présence de tels ingrédients dans la couche non active déposée sur le collecteur.

La nature du matériau carboné conducteur électronique, du sel, du matériau actif, des liants organiques et de l'additif conducteur de l'électricité peut être identique à celle mentionnée dans la partie descriptive de l'ensemble en tant que tel.

L'électrode de l'ensemble peut être notamment une électrode positive.

L'ensemble conforme à l'invention est destiné à entrer dans la constitution d'un accumulateur.

L'invention a ainsi trait, également à un accumulateur comprenant au moins un ensemble tel que défini ci-dessus.

L'accumulateur de l'invention comprend classiquement au moins une cellule électrochimique comprenant :
- un ensemble tel que défini ci-dessus ;
- une électrode de polarité opposée à l'électrode de l'ensemble ; et
- un électrolyte disposé entre ledit ensemble *via* la couche d'électrode et ladite électrode de polarité opposée.

Plus spécifiquement, l'électrode de l'ensemble est une électrode positive et l'électrode de polarité opposée est donc une électrode négative.

On précise que, par électrode positive, on entend, classiquement, dans ce qui précède et ce qui suit, l'électrode qui fait office de cathode, quand le générateur débite du courant (c'est-à-dire lorsqu'il est en processus de décharge) et qui fait office d'anode lorsque le générateur est en processus de charge.

On précise que, par électrode négative, on entend, classiquement, dans ce qui précède et ce qui suit, l'électrode qui fait office d'anode, quand le générateur débite du courant (c'est-à-dire lorsqu'il est en processus de décharge) et qui fait office de cathode, lorsque le générateur est en processus de charge.

L'électrode négative comprend, classiquement, comme matériau actif d'électrode, un matériau apte à insérer, de manière réversible, du lithium ou à former un alliage avec le lithium (lorsque l'accumulateur est un accumulateur au lithium), du sodium (lorsque l'accumulateur est un accumulateur au sodium), du potassium (lorsque l'accumulateur est un accumulateur au potassium) ou du magnésium (lorsque l'accumulateur est un accumulateur au magnésium).

En particulier, pour un accumulateur au lithium, le matériau actif d'électrode négative peut être :
- un matériau carboné, tel que du carbone dur (connu sous l'appellation anglo-saxonne « *hard carbon* »), du graphite naturel ou du graphite artificiel ;
- du lithium métallique ou un matériau apte à former un alliage avec le lithium, tel que le silicium, l'étain ; ou
- un oxyde mixte de lithium, tel que Li₄Ti₅O₁₂ ou LiTiO₂.

En outre, au même titre que pour l'électrode positive, notamment lorsqu'elle n'est pas en lithium métallique, l'électrode négative peut comprendre un liant organique, tel qu'un liant polymérique, tel que du polyfluorure de vinylidène (PVDF), un mélange carboxyméthylcellulose avec un latex du type styrène et/ou acrylique ainsi que un ou plusieurs additifs conducteurs de l'électricité, qui peuvent être des matériaux carbonés, comme du noir de carbone. Qui plus est, au même titre que pour l'électrode positive, l'électrode négative peut se présenter, d'un point de vue structural, comme un matériau composite comprenant une matrice en liant(s) organique(s) au sein de laquelle sont dispersées des charges constituées par le matériau actif (se présentant, par exemple, sous forme particulaire) et éventuellement le ou les additifs conducteurs de l'électricité, ledit matériau composite pouvant être déposé sur un collecteur de courant.

L'électrolyte, disposé entre l'électrode positive et l'électrode négative, est quant à lui un électrolyte conducteur d'ions lithium (lorsque l'accumulateur est un accumulateur au lithium), d'ions sodium (lorsque l'accumulateur est un accumulateur au sodium), d'ions potassium (lorsque l'accumulateur est un accumulateur au potassium), d'ions magnésium (lorsque l'accumulateur est un accumulateur au magnésium), d'ions calcium (lorsque l'accumulateur est un accumulateur au calcium).

En particulier, lorsque l'accumulateur est un accumulateur lithium-ion, l'électrolyte peut être :
- un électrolyte liquide comprenant un sel de lithium dissous dans au moins un solvant organique, tel qu'un solvant apolaire aprotique ;
- un liquide ionique ; ou
- un électrolyte solide polymère ou céramique.

A titre d'exemples de sel de lithium, on peut citer LiClO₄, LiAsF₆, LiPF₆, LiBF₄, LiRfSO₃, LiCH₃SO₃, LiN(RfSO₂)₂, Rf étant choisi parmi F ou un groupe perfluoroalkyle comportant de 1 à 8 atomes de carbone, du trifluorométhanesulfonylimidure de lithium (connu sous l'abréviation LiTFSI), du bis(oxalato)borate de lithium (connu sous l'abréviation LiBOB), du bis(perfluoréthylsulfonyl)imidure de lithium (également connu sous l'abréviation LiBETI), du fluoroalkylphosphate de lithium (connu sous l'abréviation LiFAP).

A titre d'exemples de solvants organiques susceptibles d'entrer dans la constitution de l'électrolyte susmentionné, on peut citer les solvants carbonates, tels que les solvants carbonates cycliques, les solvants carbonates linéaires et les mélanges de ceux-ci.

A titre d'exemples de solvants carbonates cycliques, on peut citer le carbonate d'éthylène (symbolisé par l'abréviation EC), le carbone de propylène (symbolisé par l'abréviation PC).

A titre d'exemples de solvants carbonates linéaires, on peut citer le carbonate de diméthyle ou le carbonate de diéthyle (symbolisé par l'abréviation DEC), le carbonate de diméthyle (symbolisé par l'abréviation DMC), le carbonate d'éthylméthyle (symbolisé par l'abréviation EMC).

En outre, l'électrolyte peut être amené à imbiber un élément séparateur, par un élément séparateur polymérique poreux, disposé entre les deux électrodes de l'accumulateur.

D'autres caractéristiques et avantages de l'invention apparaîtront du complément de description qui suit et qui se rapporte à des modes de réalisation particuliers.

Bien entendu, ce complément de description n'est donné qu'à titre d'illustration de l'invention et n'en constitue en aucun cas une limitation.

### BRÈVE DESCRIPTION DES DESSINS

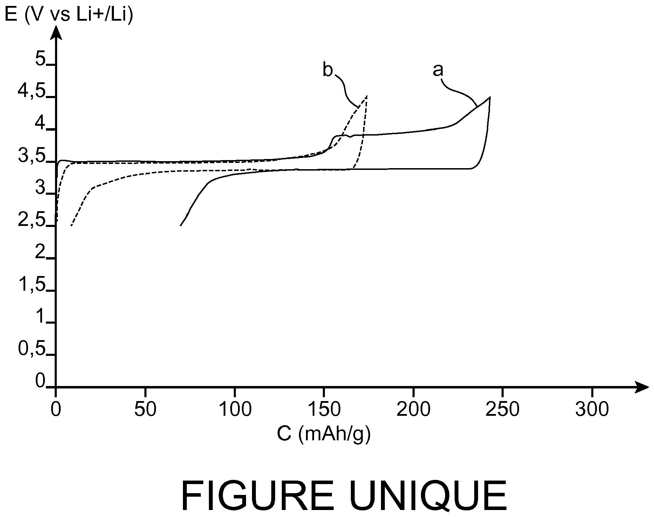

La figure unique est un graphique illustrant l'évolution du potentiel E (en V vs Li⁺/Li ) en fonction de la capacité spécifique C (en mAh/g) avec les courbes a et b faisant référence, respectivement, au premier cycle et au second cycle de la pile bouton obtenue à l'exemple ci-dessous.

### EXPOSÉ DÉTAILLÉ DE MODES DE RÉALISATION PARTICULIERS

### EXEMPLE

Le présent exemple illustre la préparation d'un ensemble conforme à l'invention et son incorporation dans un accumulateur au lithium.

Dans un premier temps, il est préparé une poudre de sel sacrificiel, qui est du squarate de lithium, de formule (X) suivante :

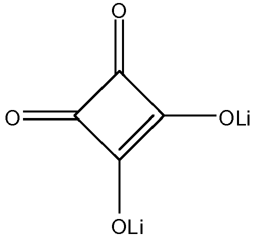

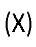

Plus précisément, le squarate de lithium est préparé par réaction en quantité stoechiométrique de l'acide squarique avec du carbonate de lithium en milieu aqueux. Le milieu réactionnel est ensuite évaporé à l'évaporateur rotatif, moyennant quoi il résulte une poudre blanche avec un rendement quantitatif. Avant utilisation, cette poudre est séchée à 50°C, afin de s'assurer de l'élimination de toutes traces d'eau.

Dans un deuxième temps, il est procédé à la préparation d'une première composition à partir de la poudre de squarate de lithium obtenue. Pour ce faire, la poudre de squarate de lithium obtenue (45% en masse sèche) pesée sous sorbonne est dispersée dans de la N-méthylpyrrolidone en présence d'un mélange comprenant un liant PVDF (25% en masse sèche) et du noir de carbone (Ketjen Black EC600J, 30% en masse sèche).

La première composition est enduite avec une épaisseur humide de 100 µm sur un feuillard en aluminium de 20 µm d'épaisseur puis séchée pendant 12 heures à 55°C.

En parallèle, il est procédé à la préparation d'une deuxième composition comprenant du LiFePO₄ (70% en masse), du noir de carbone (Super P^{®}, 15% en masse) et du PVDF (15% en masse) dispersés dans de la N-méthylpyrrolidone (l'extrait sec étant de 40% en masse).

Cette deuxième composition est ensuite enduite avec une épaisseur humide de 100 µm sur la couche préalablement obtenue puis séchée pendant 12 heures à 55°C.

L'ensemble ainsi obtenu est ensuite découpé sous forme d'un disque de 14 mm de diamètre et pressé à 10 tonnes, en vue d'être monté dans une cellule d'accumulateur au lithium.

Le disque ainsi pressé est ensuite monté dans une cellule d'accumulateur se présentant sous forme d'une pile bouton avec une électrode négative se présentant sous forme d'un disque de lithium de 16 mm de diamètre et un séparateur en polyoléfine disposé entre l'électrode négative et l'électrode positive, ledit séparateur étant imprégné d'un électrolyte à base de carbonates d'alkyle et d'un sel de lithium.

La pile bouton ainsi obtenue est soumise au test suivant :
- lors d'un premier cycle à un régime de C/20 entre 2,5 V et 4,5 V à 25°C ;
- lors d'un second cycle à un régime de C/10 entre 2,5 V et 4,5 V à 25°C.

Les résultats de ce test sont reportés sur la figure unique, qui illustre l'évolution du potentiel E (en V) en fonction de la capacité spécifique C (en mAh/g) de l'électrode positive, avec la courbe a) correspondant au premier cycle et la courbe b) correspondant au second cycle.

Lors de la première charge, on observe un premier plateau à 3,5 V correspondant à la délithiation du matériau actif LiFePO₄ puis un second plateau vers 4 V lié à la décomposition électrochimique du sel sacrificiel contenu dans la couche non active déposée sur le collecteur de courant. Ce second phénomène n'est plus visible ni lors de la décharge, où seul la lithiation du LiFePO₄ est observée ni lors du second cycle, alors que les performances du matériau de l'électrode sont conservés.

## Revendications

1. Collecteur de courant pour accumulateur à insertion ou désinsertion ionique, lequel collecteur est revêtu sur au moins une de ses faces d'une couche non active destinée à faire la jonction entre ledit collecteur de courant et une électrode comprenant un matériau actif, ladite couche non active comprenant au moins un liant organique et au moins un sel, dont un des ions est celui intervenant dans le processus d'insertion ou désinsertion ionique dans le matériau actif de l'électrode, lequel sel est un sel sacrificiel.

2. Collecteur de courant selon la revendication 1, qui comporte un substrat métallique.

3. Collecteur de courant selon l'une quelconque des revendications précédentes, dans lequel le sel est un sel comprenant un anion et un contre-ion alcalin choisi parmi le lithium, lorsque l'accumulateur est un accumulateur au lithium ; le sodium, lorsque l'accumulateur est un accumulateur au sodium ; le potassium, lorsque l'accumulateur est un accumulateur au potassium ; un contre-ion alcalino-terreux, qui est du magnésium, lorsque l'accumulateur est un accumulateur au magnésium ou du calcium, lorsque l'accumulateur est un accumulateur au calcium.

4. Collecteur de courant selon l'une quelconque des revendications précédentes, dans lequel le sel est choisi parmi :
- les azotures de formule N₃A, avec A correspondant à un cation lithium, sodium ou potassium ; les diazotures de formule (N₃)₂A¹ avec A¹ correspondant à un cation magnésium ou calcium ;
- les sels oxocarbonés répondant à l'une des formules (I) à (IV) suivantes : 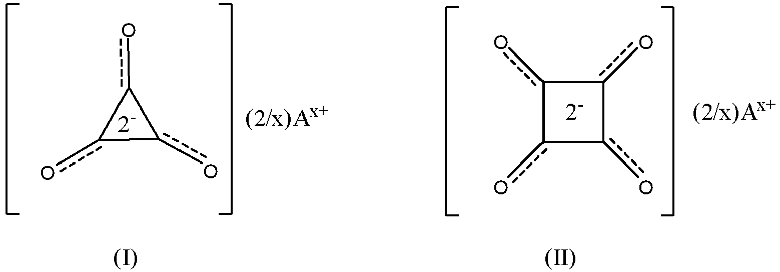 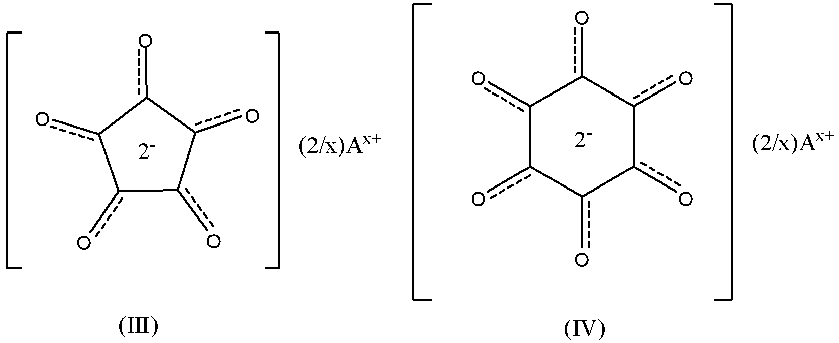 les formules susmentionnées indiquant que deux charges négatives sont portées par deux atomes d'oxygène du cycle auxquels ils sont liés, les autres atomes d'oxygène étant liés par une double liaison au cycle, A correspondant à un cation lithium, sodium, potassium, calcium, magnésium et x correspondant au nombre de charges du cation ;
- les cétocarboxylates répondant à l'une des formules (V) à (VII) suivantes : 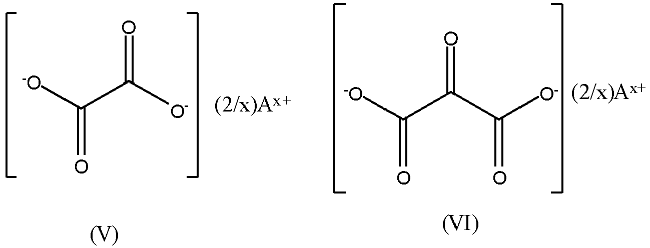 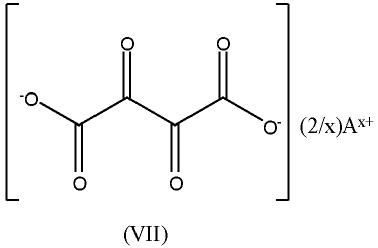 avec A correspondant à un cation lithium, sodium, potassium, calcium, magnésium et x correspondant au nombre de charges du cation ;
- les hydrazides de lithium répondant à l'une des formules (VIII) et (IX) suivantes : 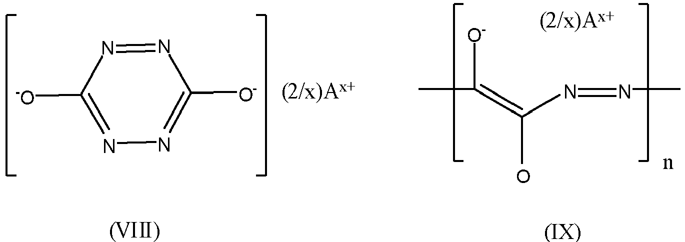 avec A correspondant à un cation lithium, sodium, potassium, calcium, magnésium, x correspondant au nombre de charges du cation et n correspondant au nombre de répétition du motif pris entre crochets, ce nombre de répétition pouvant aller de 3 à 1000.

5. Collecteur de courant selon l'une quelconque des revendications précédentes, dans lequel le collecteur de courant est destiné à un accumulateur au lithium et le sel est un sel de lithium choisi parmi :
- l'azoture de lithium de formule LiN₃;
- le squarate de lithium de formule (X) suivante : 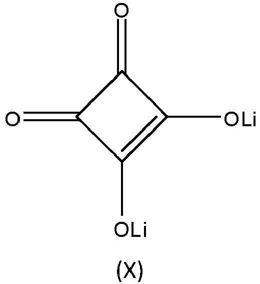
- l'oxalate de lithium de formule (XI) suivante :

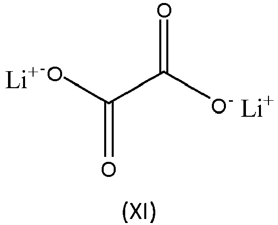

6. Collecteur de courant selon l'une quelconque des revendications précédentes, dans lequel la couche non active comprend, en outre, au moins un matériau carboné conducteur électronique.

7. Collecteur de courant selon la revendication 6, dans lequel le matériau carboné conducteur électronique est un matériau comprenant du carbone à l'état élémentaire sous forme divisée.

8. Collecteur de courant selon la revendication 6 ou 7, dans lequel le matériau carboné conducteur électronique est choisi parmi du graphite ; des billes de mésocarbone ; des fibres de carbone; du noir de carbone; du graphène ; des nanotubes de carbone et des mélanges de ceux-ci.

9. Collecteur de courant selon l'une quelconque des revendications précédentes, dans lequel le collecteur de courant est destiné à un accumulateur au lithium et la couche non active est constituée d'une matrice en polyfluorure de vinylidène, dans laquelle sont dispersés du noir de carbone et du squarate de lithium.

10. Collecteur de courant selon l'une quelconque des revendications précédentes, dans lequel la couche non active est dépourvue de matériau actif.

11. Ensemble comprenant le collecteur de courant tel que défini selon l'une quelconque des revendications 1 à 10 et une électrode comprenant un matériau actif, la couche non active revêtant le collecteur de courant faisant jonction entre le collecteur de courant et l'électrode comprenant un matériau actif.

12. Ensemble selon la revendication 11, dans lequel l'ensemble est destiné à un accumulateur au lithium et le matériau actif est un matériau du type oxyde lithié comprenant au moins un élément métallique de transition, du type phosphate lithié comprenant au moins un élément métallique de transition, du type silicate lithié comprenant au moins un élément métallique de transition ou du type borate lithié comprenant au moins un élément métallique de transition.

13. Ensemble selon l'une quelconque des revendications 11 ou 12, dans lequel l'électrode est une électrode positive.

14. Accumulateur comprenant au moins une cellule électrochimique comprenant :
- un ensemble tel que défini selon la revendication 11 ou 12 ;
- une électrode de polarité opposée à l'électrode de l'ensemble ; et
- un électrolyte disposé entre ledit ensemble *via* la couche d'électrode et ladite électrode de polarité opposée.

15. Accumulateur selon la revendication 14, dans lequel l'électrode de l'ensemble est une électrode positive et l'électrode de polarité opposée est une électrode négative.

## Patentansprüche

1. Stromabnehmer für loneneinlagerungs- oder -auslagerungsakkumulatoren, der auf wenigstens einer Seite mit einer nicht-aktiven Schicht beschichtet ist, die dazu bestimmt sind, den Stromabnehmer mit einer Elektrode zu verbinden, die ein aktives Material umfasst, wobei die nicht-aktive Schicht wenigstens ein organisches Bindemittel und wenigstens ein Salz umfasst, von dem eines der Ionen dasjenige ist, das an dem loneneinlagerungs- oder -auslagerungsprozess in dem aktiven Material der Elektrode beteiligt ist, wobei das Salz ein Opfersalz ist.

2. Stromabnehmer nach Anspruch 1, der ein metallisches Substrat umfasst.

3. Stromabnehmer nach einem der vorhergehenden Ansprüche, wobei das Salz ein Salz ist, das ein Anion und ein alkalisches Gegenion umfasst, gewählt aus Lithium, wenn der Akkumulator ein Lithiumakkumulator ist, Natrium, wenn der Akkumulator ein Natriumakkumulator ist, Kalium, wenn der Akkumulator ein Kaliumakkumulator ist, ein Erdalkali-Gegenion, das Magnesium ist, wenn der Akkumulator ein Magnesiumakkumulator ist, oder Calcium, wenn der Akkumulator ein Calciumakkumulator ist.

4. Stromabnehmer nach einem der vorhergehenden Ansprüche, wobei das Salz gewählt ist aus:
- Aziden der Formel N₃A, wobei A ein Lithium-, Natrium- oder Kaliumkation ist; Diaziden der Formel (N₃)₂A¹, wobei A¹ ein Magnesium- oder Calciumkation ist;
- Oxocarbonsalzen, die einer der folgenden Formeln (I) bis (IV) entsprechen: 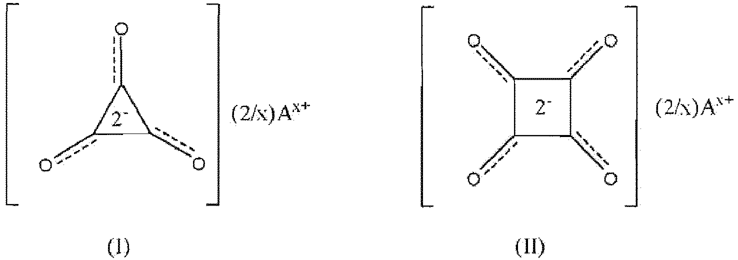 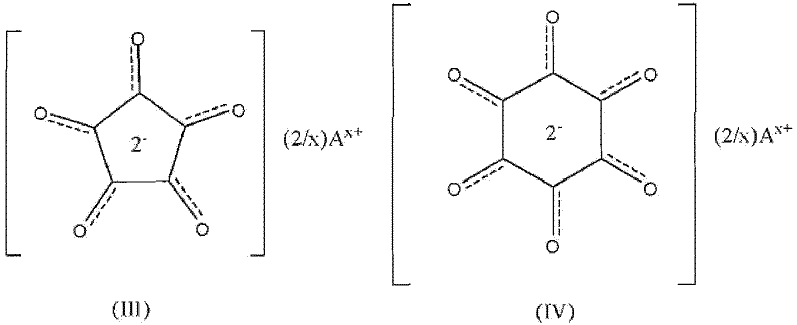 wobei die obigen Formeln anzeigen, dass zwei negative Ladungen von zwei Ringsauerstoffatomen getragen werden, an die sie gebunden sind, wobei die anderen Sauerstoffatome durch eine Doppelbindung an den Ring gebunden sind, wobei A ein Lithium-, Natrium-, Kalium-, Calcium- oder Magnesiumkation ist und x die Anzahl der Ladungen des Kations ist;
- Cetocarboxylaten, die einer der folgenden Formeln (V) bis (VII) entsprechen: 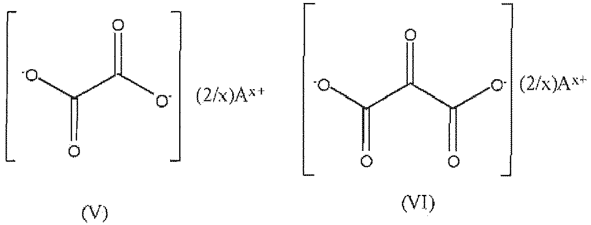 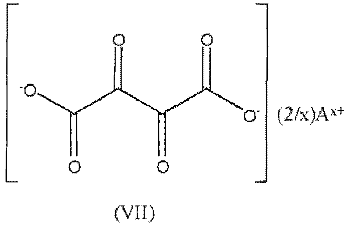 wobei A ein Lithium-, Natrium-, Kalium-, Calcium- oder Magnesiumkation ist und x die Anzahl der Ladungen des Kations ist;
- Lithiumhydraziden, die einer der folgenden Formeln (VIII) und (IX) entsprechen: 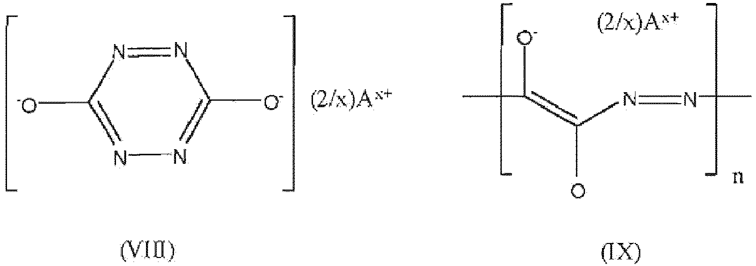 wobei A einem Lithium-, Natrium-, Kalium-, Calcium- oder Magnesiumkation entspricht, x der Anzahl der Ladungen des Kations und n der Anzahl der Wiederholungen der Einheit in eckigen Klammern entspricht, wobei diese Anzahl der Wiederholungen zwischen 3 und 1000 liegen kann.

5. Stromabnehmer nach einem der vorhergehenden Ansprüche, wobei der Stromabnehmer für einen Lithiumakkumulator bestimmt ist und das Salz ein Lithiumsalz ist, gewählt aus:
- Lithiumazid der Formel LiN₃;
- Lithiumsquarat der folgenden Formel (X): 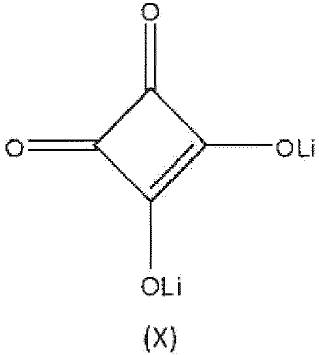
- Lithiumoxalat der folgenden Formel (XI):

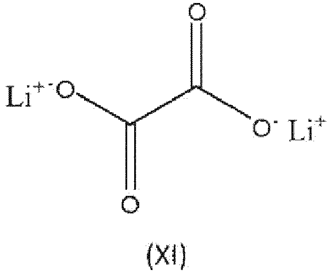

6. Stromabnehmer nach einem der vorhergehenden Ansprüche, wobei die nicht aktive Schicht ferner wenigstens ein elektronisch leitendes Kohlenstoffmaterial umfasst.

7. Stromabnehmer nach Anspruch 6, wobei das elektronisch leitende Kohlenstoffmaterial ein Material ist, das elementaren Kohlenstoff in geteilter Form enthält.

8. Stromabnehmer nach Anspruch 6 oder 7, wobei das elektronisch leitende Kohlenstoffmaterial gewählt ist aus Graphit, Mesokohlenstoffkügelchen, Kohlenstofffasern, Ruß, Graphen, Kohlenstoffnanoröhren und Mischungen davon.

9. Stromabnehmer nach einem der vorhergehenden Ansprüche, wobei der Stromabnehmer für einen Lithiumakkumulator bestimmt ist und die nicht aktive Schicht aus einer Polyvinylidenfluoridmatrix besteht, in der Ruß und Lithiumsquarat dispergiert sind.

10. Stromabnehmer nach einem der vorhergehenden Ansprüche, wobei die nicht aktive Schicht frei von aktivem Material ist.

11. Anordnung mit dem Stromabnehmer nach einem der Ansprüche 1 bis 10 und einer Elektrode aus einem aktiven Material, wobei die den Stromabnehmer bedeckende nicht aktive Schicht den Stromabnehmer und die ein aktives Material umfassende Elektrode verbindet.

12. Anordnung nach Anspruch 11, wobei die Anordnung für einen Lithiumakkumulator bestimmt ist und das aktive Material ein Material vom Typ lithiumhaltiges Oxidmaterial ist, umfassend wenigstens ein Übergangsmetallelement, vom Typ lithiumhaltiges Phosphatmaterial, umfassend wenigstens ein Übergangsmetallelement, vom Typ lithiumhaltiges Silikatmaterial, umfassend wenigstens ein Übergangsmetallelement oder vom Typ lithiumhaltiges Boratmaterial, umfassend wenigstens ein Übergangsmetallelement.

13. Anordnung nach einem der Ansprüche 11 oder 12, wobei die Elektrode eine positive Elektrode ist.

14. Akkumulator, umfassend wenigstens eine elektrochemische Zelle, die Folgendes umfasst:
- eine Anordnung nach Anspruch 11 oder 12;
- eine Elektrode mit entgegengesetzter Polarität zur Elektrode der Anordnung; und
- ein Elektrolyt, der zwischen der Anordnung über die Elektrodenschicht und der Elektrode mit entgegengesetzter Polarität angeordnet ist.

15. Akkumulator nach Anspruch 14, wobei die Elektrode der Anordnung eine positive Elektrode und die Elektrode mit entgegengesetzter Polarität eine negative Elektrode ist.

## Claims

1. Current collector for an accumulator with ion insertion or deinsertion, said collector is coated on at least one of the faces thereof with an inactive layer intended for providing the junction between said current collector and an electrode comprising an active material, said inactive layer comprising at least one organic binder and at least one salt, whereof one of the ions is same that is involved in the process of ion insertion or deinsertion in the active material of the electrode, said salt being a sacrificial salt.

2. Current collector according to claim 1, which includes a metal substrate.

3. Current collector according to any one of the preceding claims, wherein the salt is a salt comprising an anion and an alkali metal counter ion selected from lithium, when the accumulator is a lithium accumulator; sodium, when the accumulator is a sodium accumulator; potassium, when the accumulator is a potassium accumulator; an alkaline earth metal counter ion, which is magnesium, when the accumulator is a magnesium accumulator or calcium, when the accumulator is a calcium accumulator.

4. Current collector according to any one of the preceding claims, wherein the salt is selected from:
- azides of formula N₃A, with A corresponding to a lithium, sodium or potassium cation; diazides of formula (N₃)₂A¹ with A¹ corresponding to a magnesium or calcium cation;
- oxocarbon salts corresponding to one of the following formulae (I) to (IV): 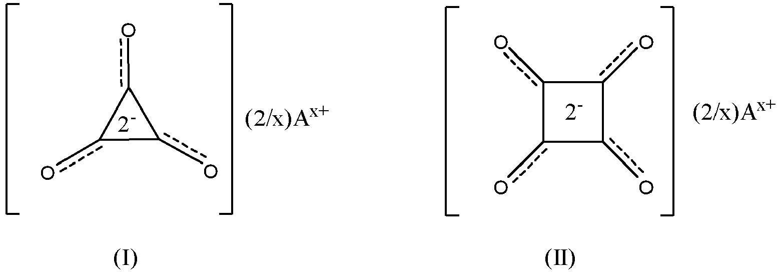 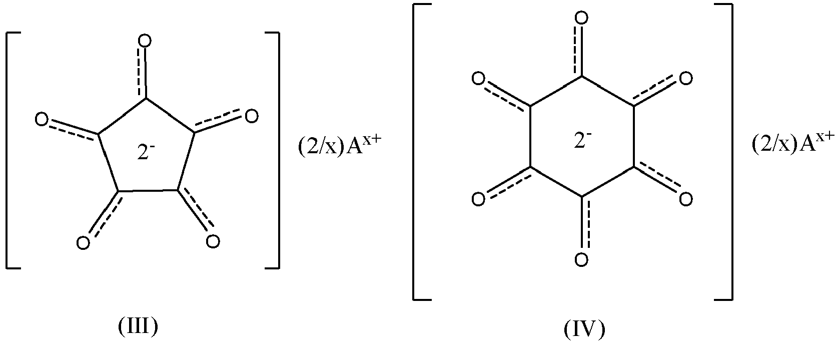 the aforementioned formulae indicating that two negative charges are carried by two oxygen atoms of the cycle to which same are linked, the other oxygen atoms being linked by a double bond to the cycle, A corresponding to a lithium, sodium, potassium, calcium, magnesium cation and x corresponding to the number of charges of the cation;
- ketocarboxylates corresponding to one of the following formulae (V) to (VII): 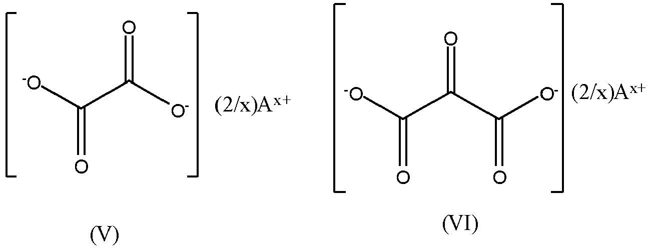 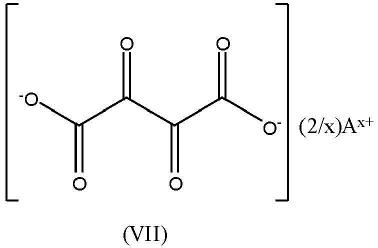 with A corresponding to a lithium, sodium, potassium, calcium, magnesium cation and x corresponding to the number of charges of the cation;
- lithium hydrazides corresponding to one of the following formulae (VIII) and (IX): 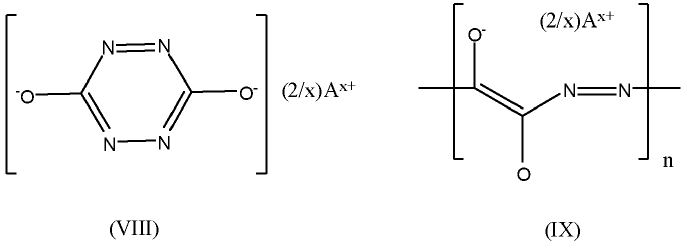 with A corresponding to a lithium, sodium, potassium, calcium, magnesium cation, x corresponding to the number of charges of the cation and n corresponding to the repetition number of the pattern taken between square brackets, said number able to range from 3 to 1000.

5. Current collector according to any one of the preceding claims, wherein the current collector is intended for a lithium accumulator and the salt is a lithium salt selected from:
- lithium azide of formula LiN₃;
- lithium squarate of following formula (X): 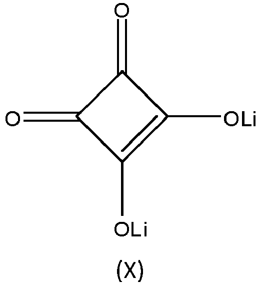
- lithium oxalate of following formula (XI):

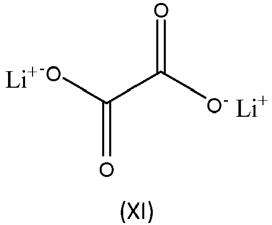

6. Current collector according to any one of the preceding claims, wherein the inactive layer further comprises at least one electronically conductive carbon material.

7. Current collector according to claim 6, wherein the electronically conductive carbon material is a material comprising carbon in the elementary state in divided form.

8. Current collector according to claim 6 or 7, wherein the electronically conductive carbon material is selected from graphite ; mesocarbon beads; carbon fibres; carbon black; graphene; carbon nanotubes and mixtures thereof.

9. Current collector according to any one of the preceding claims, wherein the current collector is intended for a lithium accumulator and the inactive layer consists of a matrix made of polyvinylidene fluoride, wherein are dispersed carbon black and lithium squarate.

10. Current collector according to any one of the preceding claims, wherein the inactive layer is devoid of active material.

11. Assembly comprising the current collector as defined according to any one of claims 1 to 10 and an electrode comprising an active material, the inactive layer coating the current collector providing junction between the current collector and the electrode comprising an active material.

12. Assembly according to claim 11, wherein the assembly is intended for a lithium accumulator and the active material is a material of the lithiated oxide type comprising at least one transition metal element, of the lithiated phosphate type comprising at least one transition metal element, of the lithiated silicate type comprising at least one transition metal element or of the lithiated borate type comprising at least one transition metal element.

13. Assembly according to claim 11 or 12, wherein the electrode is a positive electrode.

14. Accumulator comprising at least one electrochemical cell comprising:
- an assembly as defined according to claim 11 or 12;
- an electrode of opposite polarity to the electrode of the assembly; and
- an electrolyte arranged between said assembly *via* the electrode layer and said electrode of opposite polarity.

15. Accumulator according to claim 14, wherein the electrode of the assembly is a positive electrode and the electrode of opposite polarity is a negative electrode.
